(19) **Europäisches Patentamt**

**European Patent Office**

**Office européen des brevets**

(11) **EP 1 630 976 A1**

(12) **EUROPEAN PATENT APPLICATION**
published in accordance with Art. 158(3) EPC

(43) Date of publication:
**01.03.2006 Bulletin 2006/09**

(51) Int Cl.:
**H04B 7/10** (1968.09)

(21) Application number: **03730783.2**

(22) Date of filing: **02.06.2003**

(86) International application number:
**PCT/JP2003/006947**

(87) International publication number:
**WO 2004/109952 (16.12.2004 Gazette 2004/51)**

(84) Designated Contracting States:
**DE FR GB**

(71) Applicant: **FUJITSU LIMITED**
**Kawasaki-shi, Kanagawa 211-8588 (JP)**

(72) Inventors:
 • **FUDABA, Nobukazu,**
 **c/o Fujitsu Limited**
 **Kawasaki-shi,**
 **Kanagawa 211-8588 (JP)**
 • **KUBO, Tokuro,**
 **c/o Fujitsu Limited**
 **Kawasaki-shi,**
 **Kanagawa 211-8588 (JP)**

 • **NAGATANI, Kazuo,**
 **c/o Fujitsu Limited**
 **Kawasaki-shi,**
 **Kanagawa 211-8588 (JP)**
 • **ISHIKAWA, Hiroyoshi,**
 **c/o Fujitsu Limited**
 **Kawasaki-shi,**
 **Kanagawa 211-8588 (JP)**

(74) Representative: **HOFFMANN EITLE**
 **Patent- und Rechtsanwälte**
 **Arabellastrasse 4**
 **81925 München (DE)**

(54) **ARRAY ANTENNA COMMUNICATION DEVICE AND ARRAY ANTENNA COMMUNICATION DEVICE CALIBRATION METHOD**

(57) A baseband signal generator (5) generates a baseband signal that is different for each antenna branch. After passing through a switch (6), a corrector for calibration (7), and a DAC (8), the baseband signal is input to a radio wave transmitter (9) for up-conversion, and is transmitted from an antenna (2). A part of a transmission signal is branched by a directional coupler (12), combined by a combiner (13), converted to a baseband signal by a receiver for calibration (14), analog-converted by an ADC (15), and input to an adaptive controller (16) as a feedback signal (fb). The adaptive controller (16) calculates a calibration value (cal) that minimizes the power of an error signal representing a difference between a reference signal (ref) and the feedback signal (fb), and outputs the calibration value to the corrector for calibration (7) to adaptively adjust a corrector for calibration (7).

FIG.1

**Description**

TECHNICAL FIELD

The present invention relates to an array-antenna-equipped communication apparatus, and more particularly, to an array-antenna-equipped communication apparatus with a function of calibrating a deviation of amplitude/phase of a plurality of antenna branches and a method of calibrating the array-antenna-equipped communication apparatus.

BACKGROUND ART

An array-antenna-equipped communication apparatus includes an array of antennas and antenna branches provided for the respective antennas. The array-antenna-equipped communication apparatus can control directivity of the antennas by transmitting a signal with its phase and amplitude being adjusted (weighted) for each antenna branch. The difference in amplitude/phase is required to be the same, even at antenna ends, among the antenna branches. Therefore, to optimally operate the array-antenna-equipped communication apparatus, a calibration process is required for solving an amplitude/phase deviation among antenna branches due to a power amplifier (PA) and a mixer included in a radio wave transmitting unit.

For performing a calibration process during the operation of the array-antenna-equipped communication apparatus without interrupting communication, the following two method have been suggested: (1) a method of performing a calibration based on a predetermined signal for calibration that is inserted in a transmission signal and extracted from a feedback signal thereof; and (2) a method of performing a calibration based on the transmission signal and the feedback signal thereof (in other words, without employing the predetermined signal for calibration) with an adaptive control algorithm. The method (2) is more preferable than the method (1), since the predetermined signal for calibration can interrupt a communication.

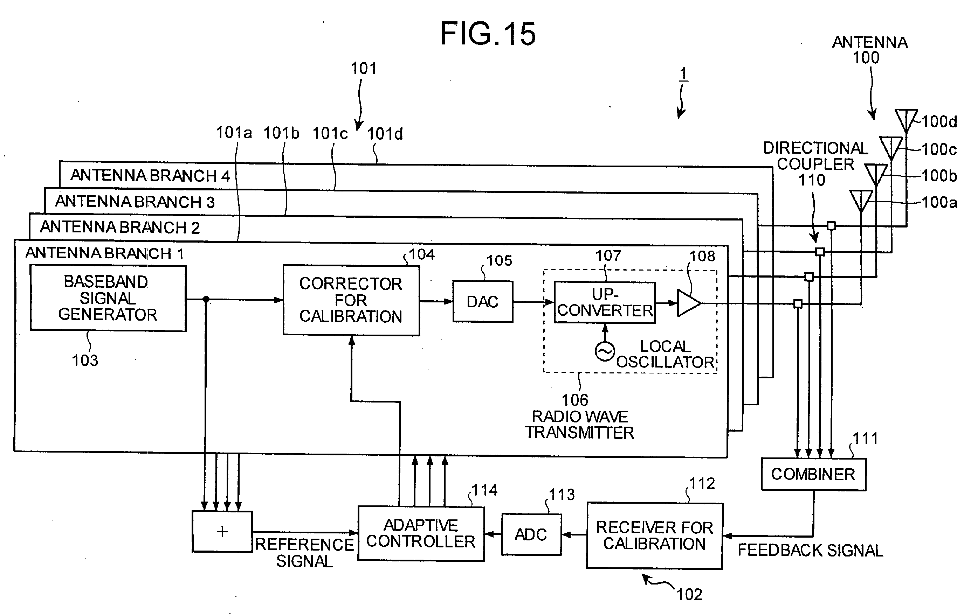

The calibration process with the adaptive control algorithm employed in the method (2) is described. Fig. 15 is a block diagram of a conventional array-antenna-equipped communication apparatus that performs the calibration process. The array-antenna-equipped communication apparatus includes an array of four antennas 100 (100a to 100d), four antenna branches 101 (101a to 101d), and a calibration processor 102 that performs the calibration process with an adaptive control algorithm. In the following explanation, the antenna branch 101a is taken as an example. The antenna branch 101a includes a baseband signal generator 103 that generates a signal by multiplying a data signal to be transmitted by a complex coefficient for array transmission. The antenna directivity can be controlled by adjusting the complex coefficient, which is different for each antenna branch. After passing through a corrector for calibration 104 and a digital-to-analog converter (DAC) 105, a baseband signal is input to a radio wave transmitter 106. An up-converter 107 of the radio wave transmitter 106 converts the baseband signal after analog conversion to an RF-band signal, to be amplified by a power amplifier (PA) 108 and transmitted from the antenna 100a.

In a calibration processor 102, a part of the transmission signals from the antenna branches 101 (101a to 101d) are branched by a directional coupler 110, combined by a combiner 111, and converted to a baseband signal by a receiver for calibration 112. The baseband signal after digital conversion by an analog-to-digital converter (ADC) 113 is input to an adaptive controller 114 as a feedback signal. The adaptive controller 114 adaptively adjusts the corrector for calibration 104 so that the power of an error signal representing a difference between the feedback signal and the baseband signal input from the baseband signal generator 103 as a reference signal is minimized. As a result, the amplitude/phase deviation due to the radio wave transmitter 106 of each antenna branch 101 (101a to 101d) is cancelled, thereby achieving calibration of the array-antenna-equipped communication apparatus.

The conventional technologies relating to the calibration of such an array-antenna-equipped communication apparatus have been disclosed, for example, in the following first to fifth patent documents.

> First patent document
> Japanese Patent Application Laid-Open Publication No. H3-165103
> Second patent document
> Japanese Patent Application Laid-Open Publication No. 2002-353724
> Third patent document
> Japanese National Phase PCT Laid-Open Publication No. H10-503892
> Fourth patent document
> Japanese Patent Application Laid-Open Publication No. H10-336149
> Fifth patent document
> Japanese Patent Application Laid-Open Publication No. 2000-216618

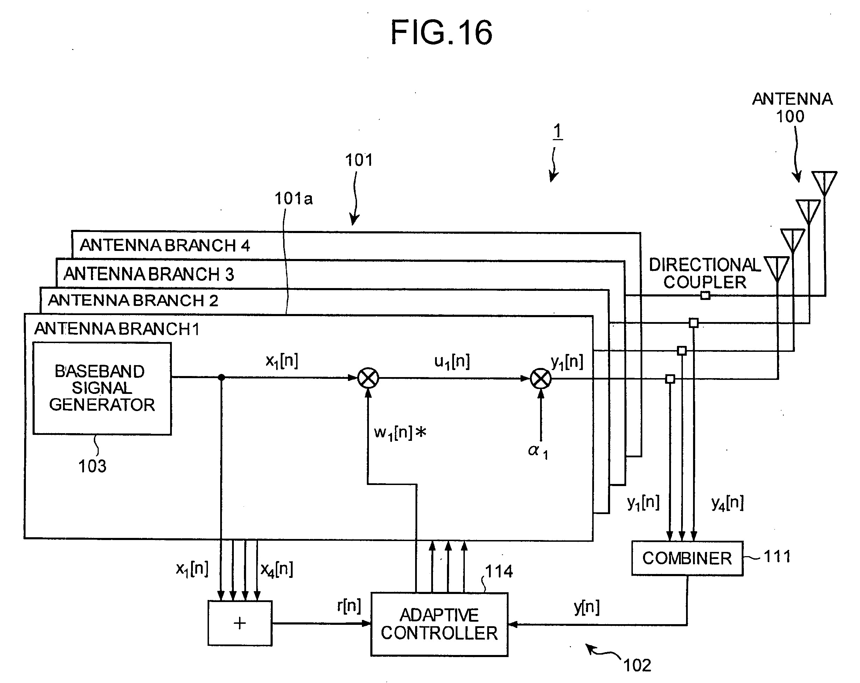

However, the conventional technology cannot ensure the convergence of the adaptive control algorithm employed in the calibration, thereby causing the calibration process to stop and disabling appropriate calibration. When the baseband signal is a narrow-band signal, the amplitude/phase deviation due to the radio wave transmitter 106 can be replaced by a multiplication of a single complex number $\alpha_i$ having no frequency characteristic. Therefore, when being represented in a digital domain, Fig. 15 can be simplified as Fig. 16. In the model shown in Fig. 16, an update equation for adaptively controlling a weight coefficient $w_i$ for calibration is generally given by the following Eq. (1). Actually, however, the following Eq. (2) is used as the update equation since $\alpha_i$ representing an amplitude/phase deviation among the antenna branches 101 (101a to 101d) is unknown.

$$w_i[n+1]=w_i[n]+\mu e^*[n](\alpha_i x_i[n]) \qquad (1)$$

$$w_i[n+1]=w_i[n]+\mu e^*[n]x_i[n] \qquad (2)$$

where $w_i[n]$ is a complex coefficient for calibration of a branch i at a time n; $x_i[n]$ is a baseband signal of the branch i at the time n; $\alpha_i$ is an amplitude/phase deviation (narrow band) at the branch i; $\mu$ is a step size; $e[n]$ is an error signal at the time n $(=r[n]-y[n])$; and $e^*[n]$ is a complex conjugate of the error signal.

In this case, however, the convergence of the algorithm is ensured only when the amplitude/phase deviation $\alpha_i$ is positioned in a right-half plane on a complex plane. In other words, the algorithm does not always converge when the amplitude/phase deviation $\alpha_i$ is positioned in a left-half plane on the complex plane. The algorithm needs an initial value of the deviation $\alpha_i$ to ensure the convergence thereof. The initial value can be manually measured at the time of starting the array-antenna-equipped communication apparatus. However, it is a cumbersome and time-consuming procedure to manually measure an accurate initial value and set the initial value in the array-antenna-equipped communication apparatus.

The present invention has been devised in view of the above problems. An object of the present invention is to provide an array-antenna-equipped communication apparatus capable of performing a stable calibration process without interrupting a communication, as well as ensuring the convergence of the adaptive control algorithm for calibration. Another object of the present invention is to provide a method for an array-antenna-equipped communication apparatus to perform a stable calibration process without interrupting a communication, as well as to ensure the convergence of the adaptive control algorithm for calibration.

DISCLOSURE OF THE INVENTION

To solve the above problems and achieve the objects, the array-antenna-equipped communication apparatus according to the present invention includes an array of antennas, a plurality of antenna branches, and a calibration processing unit that calculates, at the time of non-communication, an initial value for an adaptive control calibration process for canceling an amplitude or phase deviation due to a radio wave transmitting unit provided to each of the antenna branches.

According to the present invention, the initial value is calculated at the time of non-communication, thereby canceling the amplitude/phase deviation without interrupting the communication.

BRIEF DESCRIPTION OF THE DRAWINGS

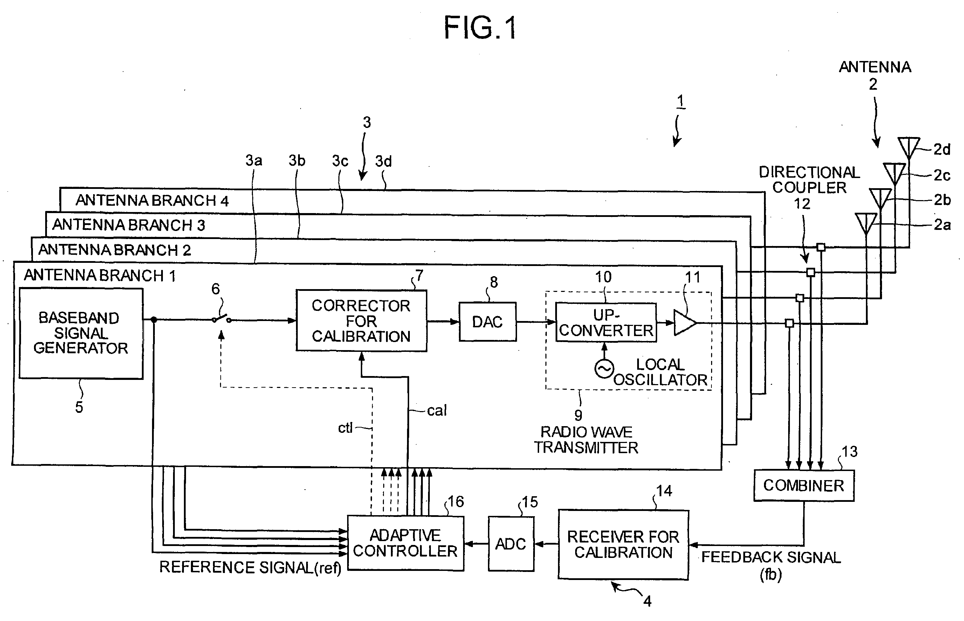

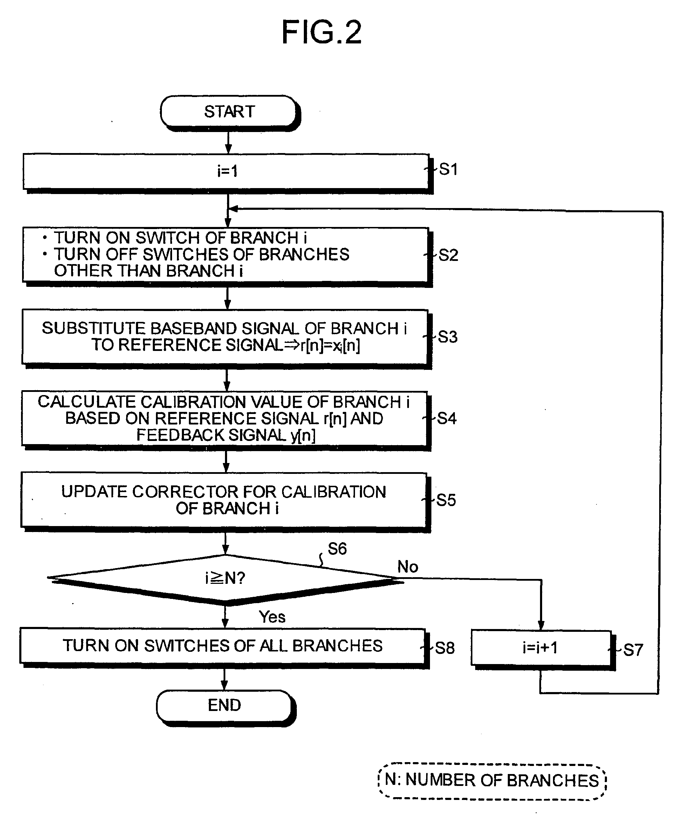

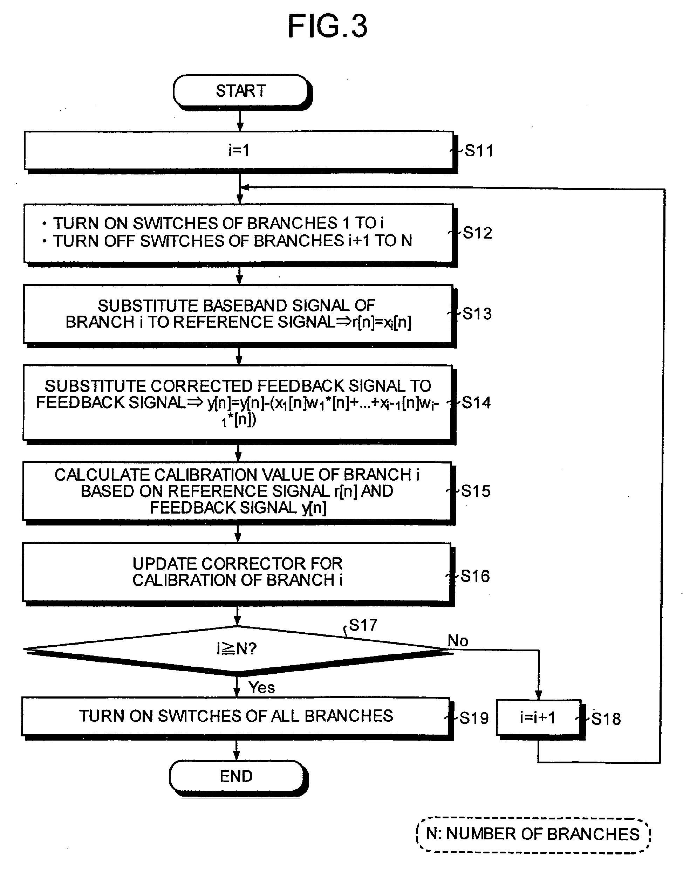

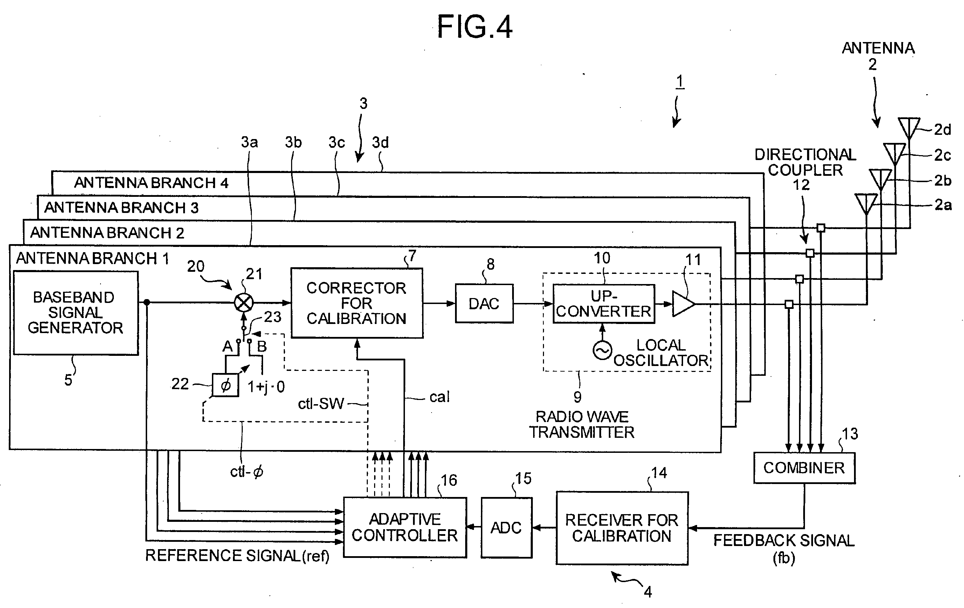

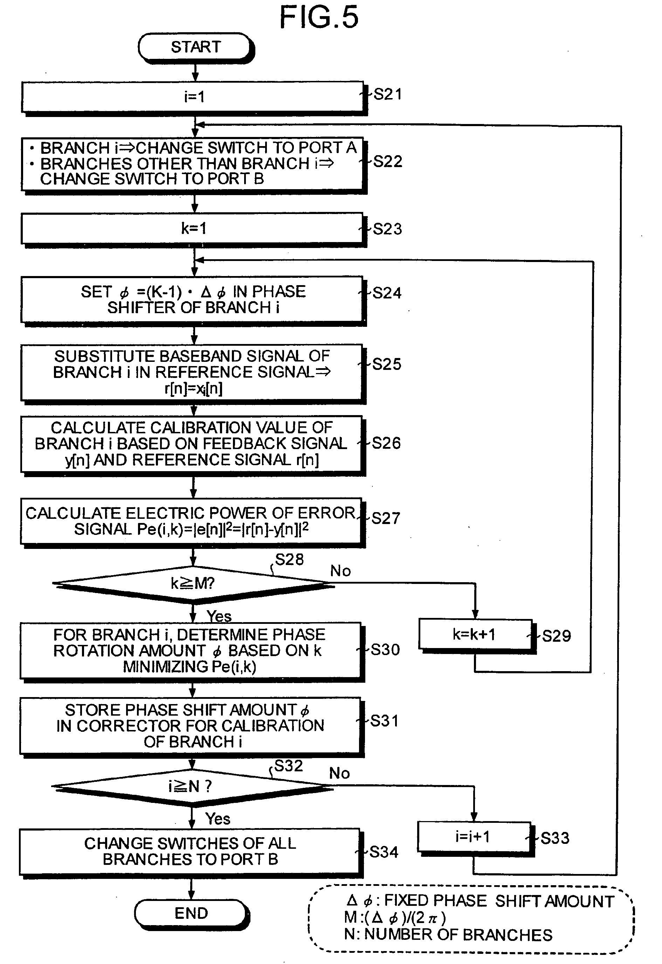

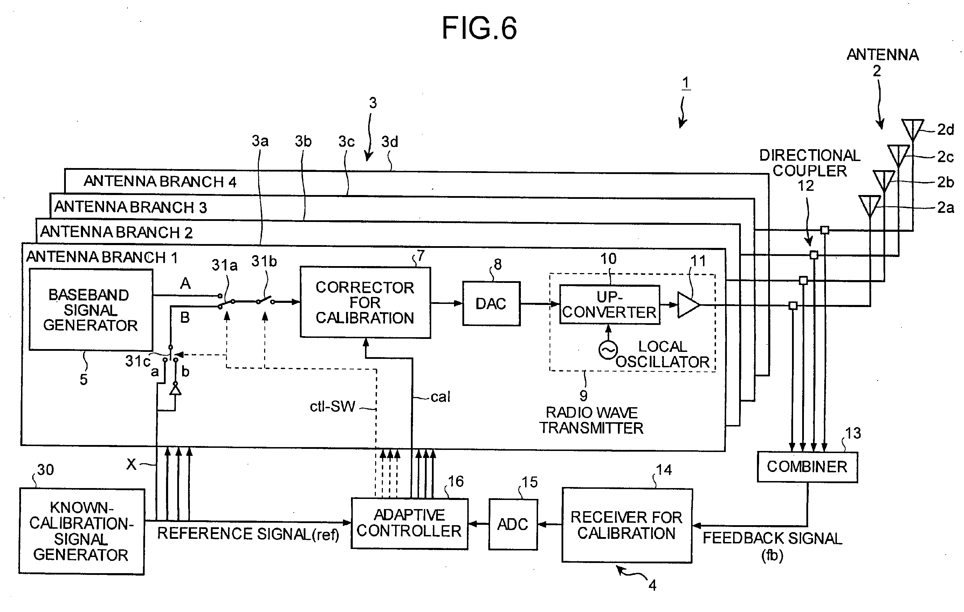

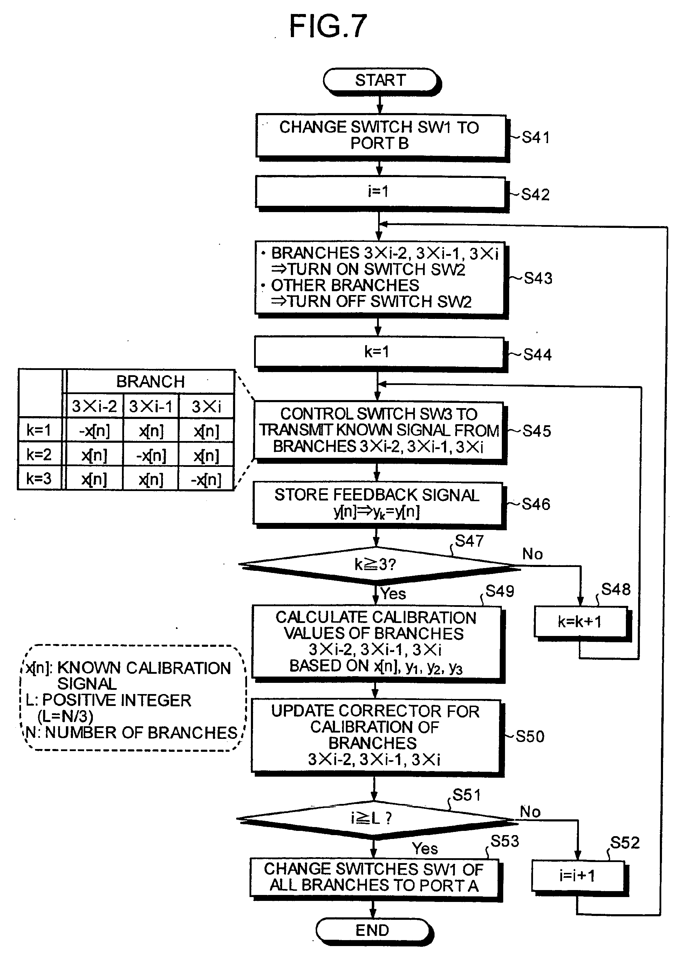

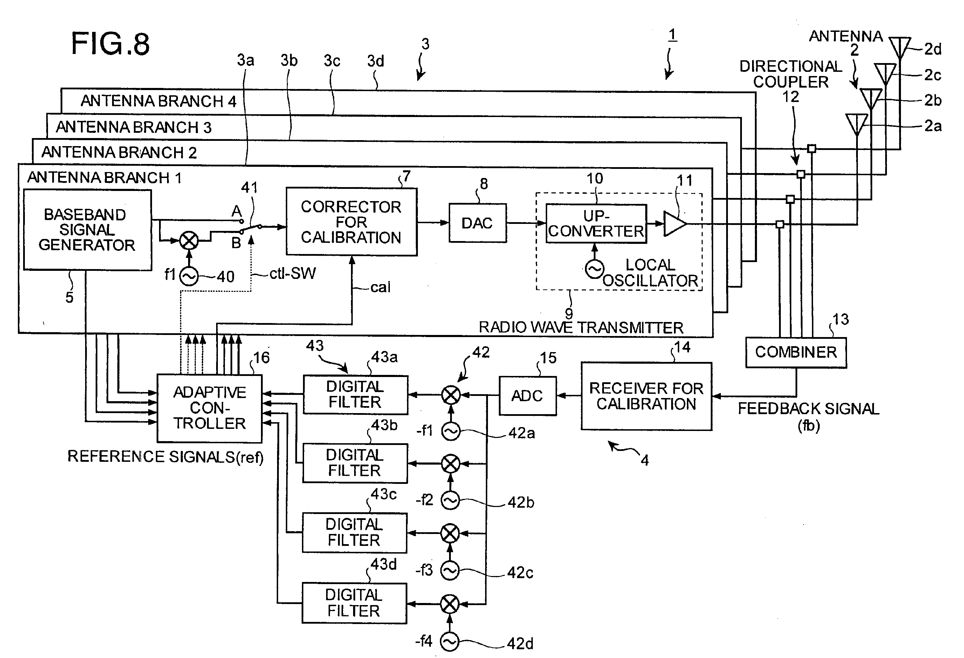

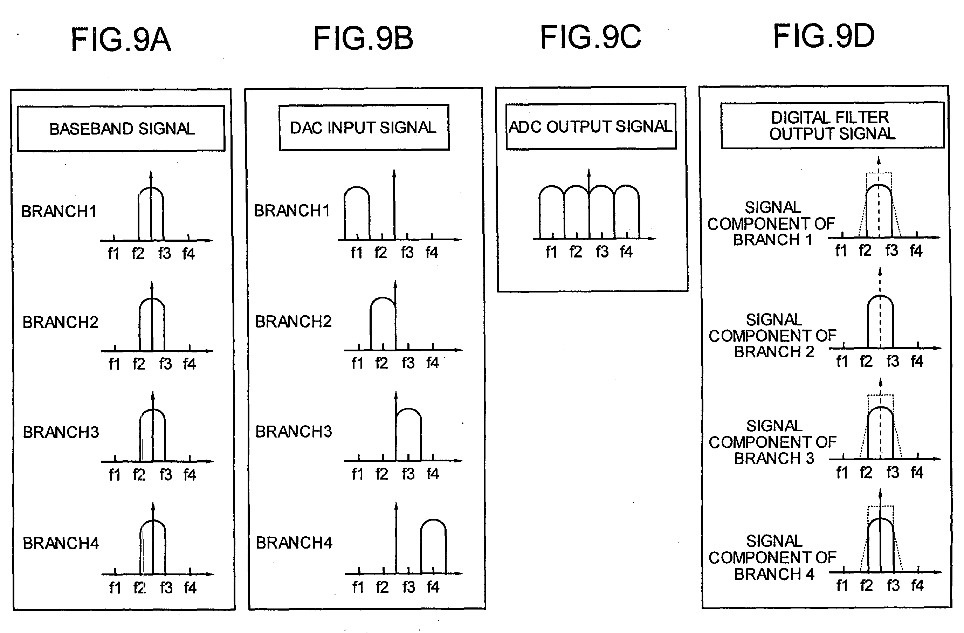

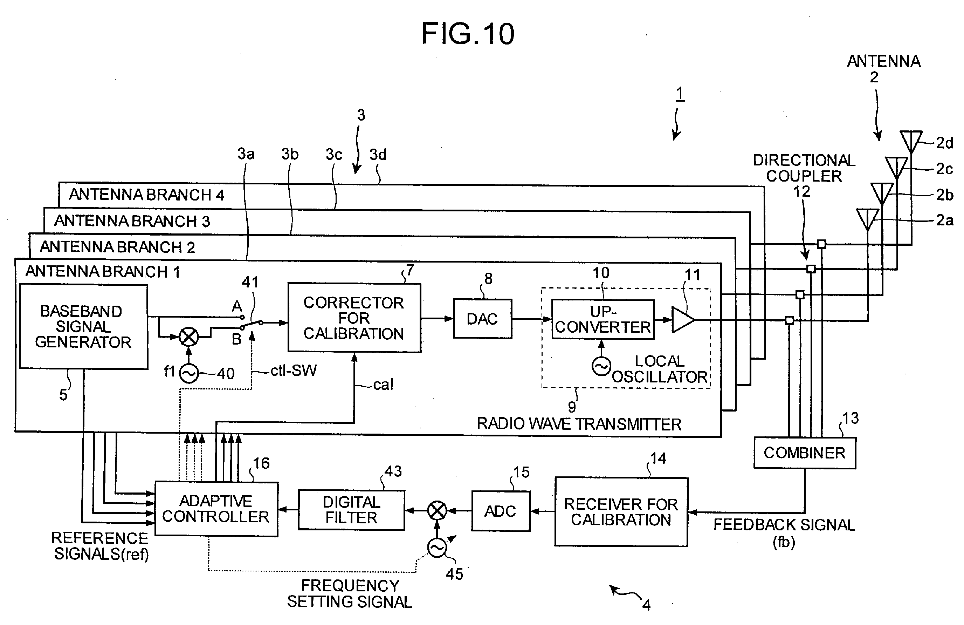

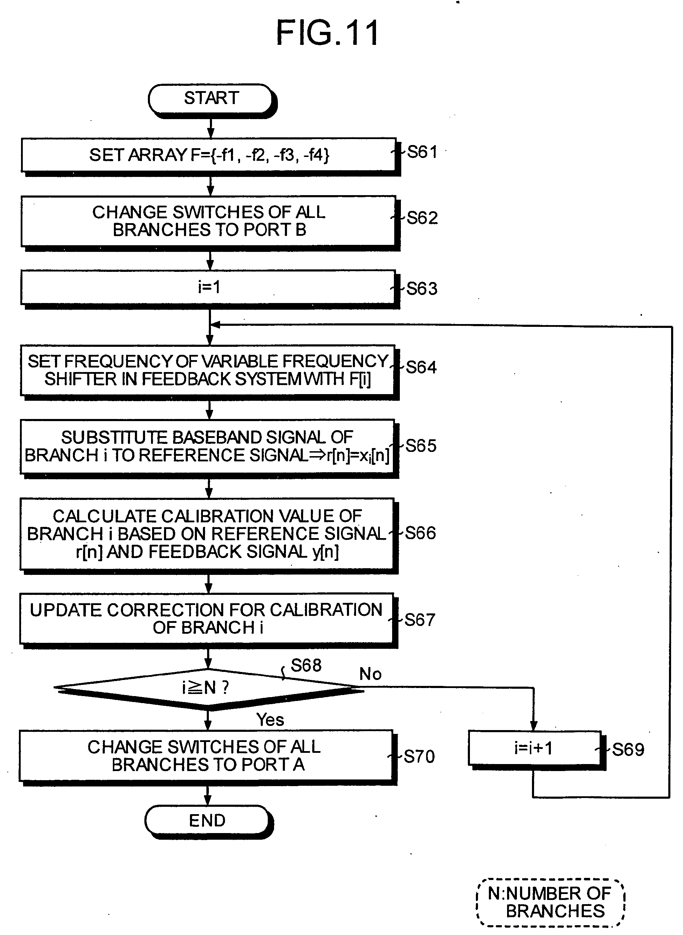

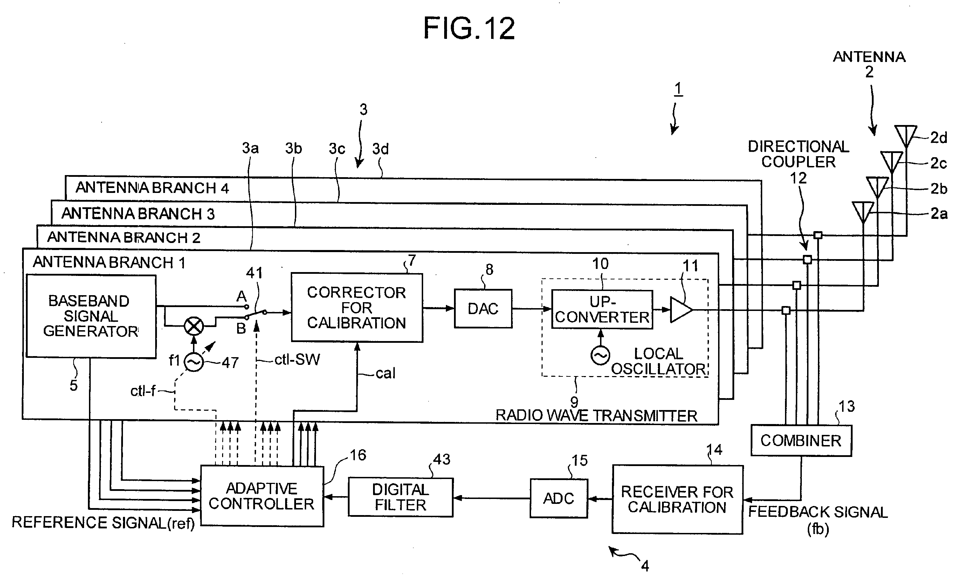

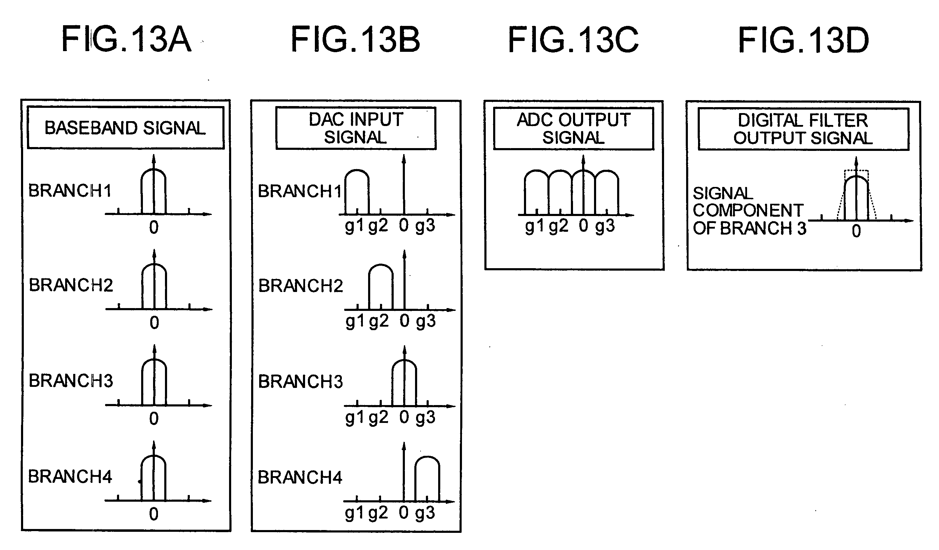

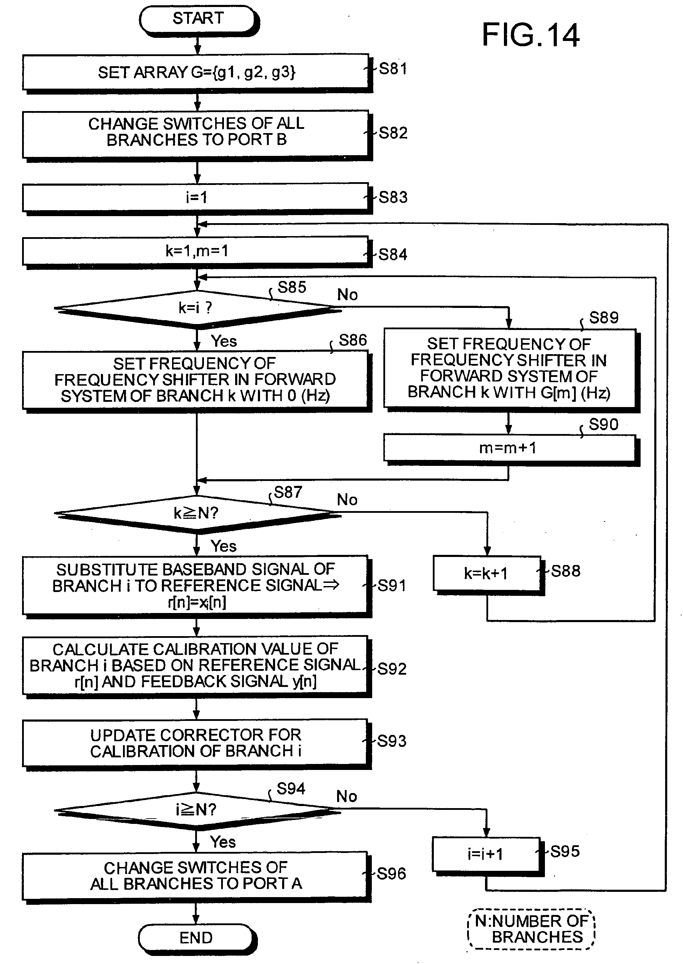

Fig. 1 is a block diagram of an array-antenna-equipped communication apparatus according to a first embodiment of the present invention; Fig. 2 is a flowchart of a calibration process according to the first embodiment; Fig. 3 is a flowchart of a calibration process according to a second embodiment of the present invention; Fig. 4 is a block diagram of an array-antenna-equipped communication apparatus according to a third embodiment of the present invention; Fig. 5 is a flowchart of a calibration process according to the third embodiment; Fig. 6 is a block diagram of an array-antenna-equipped communication apparatus according to a fourth embodiment of the present invention; Fig. 7 is a flowchart of a calibration process according to the fourth embodiment; Fig. 8 is a block diagram of an array-antenna-equipped communication apparatus according to a fifth embodiment; Figs. 9A to 9D are diagrams for explaining how the frequency of each signal is shifted according to the fifth embodiment; Fig. 10 is a block diagram of an array-antenna-equipped communication apparatus according to a sixth embodiment of the present invention; Fig. 11 is a flowchart of a calibration process according to the sixth embodiment; Fig. 12 is a block diagram of an array-antenna-equipped communication apparatus according to a seventh embodiment of the present invention; Figs. 13A to 13D are diagrams for explaining how the frequency of each signal is shifted according to the seventh embodiment; Fig. 14 is a flowchart of a calibration process according to the seventh embodiment; and Figs. 15 and 16 are block diagrams of a conventional array-antenna-equipped communication apparatus that performs a calibration process.

BEST MODE FOR CARRYING OUT THE INVENTION

Exemplary embodiments of the present invention are described below in detail with reference to the accompanying drawings. A calibration process performed by an array-antenna-equipped communication apparatus described in each of the following embodiments is performed at the time of starting the array-antenna-equipped communication apparatus, and therefore does not interrupt a communication service.

(First embodiment)

A first embodiment of the present invention is described. Fig. 1 is a block diagram of an array-antenna-equipped communication apparatus according to the first embodiment. An array-antenna-equipped communication apparatus 1 shown in Fig. 1 includes four antennas 2 (2a to 2d) and four antenna branches 3 (3a to 3d). In addition to such a basic structure, a calibration processor 4 that performs a calibration process with an adaptive control algorithm is provided. In the following explanation, an antenna branch 3a is taken as an example.

The antenna branch 3a is provided with a baseband signal generator 5 that generates a signal by multiplying a data signal to be transmitted by a complex coefficient for array transmission that is different for each branch. By adjusting the complex coefficient, the antenna directivity can be controlled. After passing through a switch (SW) 6, a corrector for calibration 7 and a digital-to-analog converter (DAC) 8, the baseband signal is input to a radio wave transmitter 9. In the radio wave transmitter 9, the baseband signal after analog conversion is converted by an up-converter 10 to an RF-band signal, is amplified by a power amplifier (PA) 11, and is then transmitted from an antenna 2a.

A part of the transmission signal from the radio wave transmitter 9 is branched by a directional coupler 12. Signals branched from each of the antenna branches 3 (3a to 3d) are combined by a combiner 13 of the calibration processor 4 into one signal, which is converted to a baseband signal by a receiver for calibration 14 of the calibration processor 4. After digital conversion by an analog-to-digital converter (ADC) 15, the baseband signal is input into an adaptive controller 16 as a feedback signal fb.

The adaptive controller 16 adaptively adjusts the corrector for calibration 7, by outputting a calibration value cal that minimizes the power of an error signal, which is a difference between the baseband signal input from the antenna branch 3a as a reference signal ref and the feedback signal fb. The corrector for calibration 7 includes a storage unit, such as a register, to retain the calibration value cal. According to the above configuration, the initial value (amplitude/ phase deviation) at the radio wave transmitter 9 of each of the antenna branches 3 (3a to 3d) is cancelled, thereby performing calibration of the array-antenna-equipped communication apparatus. The adaptive controller 16 turns on/off a switch (SW) 6 to select the baseband signal to be transmitted from among the baseband signals of each of the antenna branches 3 (3a to 3d).

The adaptive controller 16 takes in the reference signal and the feedback signal while turning on the switch 6 of any one of the antenna branches 3 (hereinafter, "a branch i", where $1 \leq i \leq N$) by outputting a switch control signal ctl to the switch 6, whereas turning off the switches 6 of branches other than the branch i. In the exemplary structure shown in Fig. 1, the baseband signals of all the antenna branches 3a to 3d are input to the adaptive controller 16 respectively, while the feedback signal fb being a combined signal of signals branched from the respective antenna branches 3a to 3d. The feedback signal fb includes only the signal of the branch i since the switches 6 of the antenna branches 3 other than the branch i are turned off. Therefore, by selecting the baseband signal of the branch i as the reference signal ref ($r[n]=x_i[n]$), calibration can be performed on the branch i.

Fig. 2 is a flowchart of a calibration process performed by the adaptive controller 16 according to the first embodiment. An initial value 1 of the branch i to be calibrated is set (step S1). The switch 6 of the branch i is turned on, and the switches 6 of branches other than the branch i are turned off (step S2). The baseband signal of the branch i is substituted to the reference signal ref ($r[n]=x_i[n]$) (step S3).

Based on the reference signal ref ($r[n]$) and the feedback signal fb ($y[n]$), the calibration value cal of the branch i is calculated (step S4), based on which the corrector for calibration 7 of the branch i is updated (step S5). When i=1, the calibration value cal stored in the corrector for calibration 7 of the antenna branch 3a is updated.

A method of initial calibration on the branch i at step S4 is described. When the baseband signal is of a narrow band, the amplitude/phase deviation of the radio wave transmitter 9 at each of the antenna branches 3 can be represented by a single complex number $\alpha_i$ (refer to Fig. 1). Therefore, if it is assumed that signal degradation in a feedback loop (the feedback signal fb) is negligible, the amplitude/phase deviation can be calculated by the following Eq. (3).

$$w_i^*[n] = a_i^* = \frac{r[n]y^*[n]}{|r[n]|^2} \qquad (3)$$

$X_i[n]$ and $w_i[n]$ respectively represent a reference signal and a calibration value at a time n of the branch I (that is, a calibration initial value). $Y[n]$ represents a feedback signal branched and combined at the time n. The symbol (*) represents an operator calculating a complex conjugate.

On the other hand, when the baseband signal is of a wide band, a characteristic of the filter in the corrector for calibration 7 needs to be adjusted so that an error between the reference signal ref and the feedback signal fb after passing through the filter is minimized.

Referring back to Fig. 2, after step S5, it is determined whether calibration has been completed for all N branches (step S6). If calibration has not been completed ("No" at step S6), the branch i to be processed is incremented by 1 (step S7), and then the procedure returns to step S2. When calibration for all branches is completed ("Yes" at step S6), the switches 6 of all branches are turned on (step S8), and initial calibration is completed.

As described above, according to the first embodiment, the antenna branches 3 to output a baseband signal are selected one by one, to sequentially perform initial calibration. Therefore, the calibration value of each of the antenna branches 3 can be accurately calculated, and a stable calibration process can be performed while ensuring the convergence of algorithm.

(Second embodiment)

A second embodiment of the present invention is described. An array-antenna-equipped communication apparatus according to the second embodiment is similar to that according to the first embodiment. However, the adaptive controller 16 according to the second embodiment turns on the switches 6 of the branches 1 to i and turns off the switches 6 of the branches i+1 to N, while incrementing the number of branches whose switches are turned on to transmit a signal by one by one. At the time of initial calibration of the branch i, calibration for the branches 1 to i-1 has been completed. Therefore, even though the switches 6 of the branches 1 to i are simultaneously turned on, the feedback signal corrected by the following Eq. (4), where the basband signal of the branch i is selected as the reference signal ($r[n]=x_i[n]$), only includes the feedback signal of the branch i.

$$y[n] = y[n] - \sum_{k=1}^{i-1} x_k[n] \cdot wk^*[n] \quad (i \neq 1) \qquad (4)$$

The calibration value described in the first embodiment is calculated based on the reference signal and the feedback signal, depending on the band of the transmission signal, thereby performing initial calibration on the branch i.

Fig. 3 is a flowchart of a calibration process performed by the adaptive controller 16 according to the second embodiment. An initial value 1 of the branch i to be calibrated is set (step S11). The switches 6 of the branches 1 to i are turned on, and the switches 6 of the other branches i+1 to N are turned off (step S12). The baseband signal of the branch i is substituted to the reference signal ref ($r[n]=x_i[n]$) (step S13). As for the feedback signal, $y[n]-(x_i[n]w_1^*[n]+...+x_{i-1}[n]w_{i-1}^*[n])$ is substituted to the feedback signal fb ($y[n]=y[n]-(x_i[n]w_1^*[n]+...+x_{i-1}[n]w_{i-1}^*[n])$) (step S14).

Based on the reference signal ref ($r[n]$) and the feedback signal fb ($y[n]$), a calibration value cal of the branch i is calculated (step S15), based on which the corrector for calibration 7 of the branch i is updated (step S16). Thereafter, it is determined whether calibration has been completed for all N branches (step S17). If calibration has not been completed ("No" at step S17), the branch i to be processed is incremented by 1 (step S18), and then the procedure returns to step S12. When calibration for all branches is completed ("Yes" at step S17), the switches 6 of all branches are turned on (step S19), and initial calibration is completed.

As described above, according to the second embodiment, the number of the antenna branches 3 to output a baseband signal is incremented one by one, to sequentially perform initial calibration. Therefore, the calibration value of each of the antenna branches 3 can be accurately calculated, and a stable calibration process can be performed while ensuring the convergence of algorithm.

(Third embodiment)

A third embodiment of the present invention is described. Fig. 4 is a block diagram of an array-antenna-equipped communication apparatus according to the third embodiment. The array-antenna-equipped communication apparatus according to the third embodiment further includes a phase shifting unit 20, which shifts the phase of the baseband signal, in addition to the same components that are described in the first and the second embodiments and provided with the same references.

The phase shifting unit 20 includes a combiner (multiplier) 21, a phase shifter 22, and a switch 23. As shown in Fig. 4, the baseband signal of each of the antenna branches 3 can be output to the radio wave transmitter 9 after being shifted its phase by a predetermined value, based on a switch control signal ctl-SW and a phase control signal ctl-$\varphi$ that are input from the adaptive controller 16. When the switch 23 is switched to a port A, the phase of the baseband signal is shifted by a predetermined value by the phase shifter 22. On the other hand, when the switch 23 is switched to a port B, the baseband signal is multiplied by $1+j \cdot 0$, and therefore passes through without being shifted by the phase shifting unit 20.

Fig. 5 is a flowchart of a calibration process performed by the adaptive controller 16 according to the third embodiment. An initial value 1 of the branch i to be calibrated is set (step S21). The switch 23 of the branch i is switched to the port A, and the switches 23 of the branches other than the branch i are switched to the port B (step S22). The initial value 1 of the number of times k for phase shifting is set (step S23). The phase of the baseband signal of the branch i is shifted by the phase shifter 22 based on the following Eq. (5), where $\Delta\varphi$ is a predetermined step size of shifting of the phase shifter 22 (step S24).

$$\varphi=(k-1)\cdot\Delta\varphi \qquad\qquad (5)$$

The baseband signal of the branch i ($r[n]=x_i[n]$) is selected as the reference signal ref (step S25) and, based on the current feedback signal fb ($y[n]$), the calibration value of the branch i is calculated (step S26). Then the power of an error signal $e[n]$ representing a difference between the reference signal ref and feedback signal fb is calculated based on the following Eq. (6) (step S27).

$$Pe(i,k)=|e[n]|^2=|r[n]-y[n]|^2 \qquad\qquad (6)$$

In each branch, the power of the error signal in Eq. (6) is measured k times ($1\leq k\leq M$, $M=(\Delta\varphi)/(2\pi)$) until k reaches M (step S28), where $M=(\Delta\varphi)/(2\pi)$ that is a maximum number of times when sequentially increasing a phase shift angle set in the phase shifter 22 by a fixed value. Until k reaches M ("No" at step S28), the value of k is incremented by 1 (step S29), thereby repeating the process at step S24 and thereafter. When k reaches M ("Yes" at step S28), a phase shift amount $\varphi$ is determined based on k that minimizes the power of the error signal of the branch i ($\min\{Pe(i, k)\}$) (step S30), and is stored as the calibration value cal in the corrector for calibration 7 of the branch i, thereby setting an initial calibration value (step S31).

Thereafter, it is determined whether calibration has been completed for all N branches (step S32). If calibration has not been completed ("No" at step S32), the branch i to be processed is incremented by 1 (step S33), and then the procedure returns to step S22. When calibration for all branches is completed ("Yes" at step S32), the switches 23 of all branches are changed to the port B (step S34), and initial calibration is completed.

In the structure described above, the phase of the feedback signal side is changed. However, calibration can be performed similarly in a structure in which the phase of the reference signal is changed by a phase shifter provided at the reference signal side. In this case, instead of the phase shift amount $\varphi$, $-\varphi$ is stored in the corrector for calibration 7.

In the third embodiment described above, the phase shifter 22 changes the phase of the baseband signal over a plurality of times by the fixed phase shirt amount $\Delta\varphi$. However, phase shift can be performed not only discretely, but also continuously. Alternatively, after the initial calibration process is completed, finer phase shift amounts $\varphi$ in a range centering on the phase shift amount $\varphi$ set in the corrector for calibration 7 may be sequentially supplied. In this case, initial calibration can be more accurately performed.

(Fourth embodiment)

A fourth embodiment of the present invention is described. Fig. 6 is a block diagram of an array-antenna-equipped communication apparatus according to the fourth embodiment. According to the fourth embodiment, components similar to those in the first embodiment are provided with the same references. According to the fourth embodiment, the structure is such that the plurality of antenna branches 3 are simultaneously calibrated by using a known calibration signal.

To achieve this, a known-calibration-signal generator 30 is provided. A plurality of switches 31 (31a to 31c) are provided for sending a signal for calibration, in place of a baseband signal, output from the known-calibration-signal generator 30 to the corrector for calibration 7. A first switch (31a) switches between the baseband signal of the antenna branch 3 (A side) and the calibration signal of the known-calibration-signal generator 30 (B side). A second switch (31b) selects, from all N branches, the number of branches that simultaneously transmit the calibration signal. A third switch (31c) switches the phase of a calibration signal x[n] between 0 degree (A side) and 180-degree reversal (B side). These three switches 31a to 31c are switch-controlled by a switch control signal ctl-SW of the adaptive controller 16.

Fig. 7 is a flowchart of a calibration process according to the fourth embodiment. As shown in Fig. 7, an exemplary process is shown in which the adaptive controller 16 performs calibration on all N branches by three branches, and for convenience of description, it is assumed that N=3xL (L: positive integer).

The first switches (31a) of all branches are down to the port B side to enter a mode of initial calibration (step S41). Thereafter, the initial value 1 of the branch i to be calibrated is set (step S42). The second switches (31b) of the branches 3×i-2, 3×i-1, and 3×i are turned on, and the second switches (31b) of the other branches are turned off (step S43). For example, when i=1 (1≤i≤L), the second switches (31b) of the branches 1, 2, and 3 are turned on.

An initial value (k=1) of the number of processes k of calibration on the three branches is set (step S44). Over the number of times where k=1 to 3, from one of the three branches, the phase of the known calibration signal x[n] is reversed for transmission (step S45). For example, when k=one time, only the third switch (31c) of the branch 1 is switched to the B side, and the known calibration signal -x[n] obtained by reversing the phase of the known calibration signal x[n] is transmitted. At this time, in the branches 2 and 3, the third switch (31c) is switched to the A side for transmission of the known calibration signal x[n]. The feedback signal y[n] at this time is retained as $y_k(y_1)$ (step S46). Thereafter, it is determined whether the process has been performed three times (k≥3) (step S47). If k has not reached 3 ("No" at step S47), the value of k is incremented by 1 (step S48), and then the procedure returns to step S45 to repeat the similar process.

That is, at step S45, when k=two times, only the third switch (31c) of the branch 2 is switched to the B side, and a phase-reversed known calibration signal -x[n] is transmitted from this branch 2. The third switches (31c) of the other branches 1 and 3 are switched to the A side. These branches 1 and 3 each transmit the known calibration signal x[n], and retains a feedback signal at this time as $y_2$. Furthermore, when k=three times, only the third switch (31c) of the branch 3 is switched to the B side, and the phase-reversed known calibration signal -x[n] is transmitted from the branch 3. The third switches (31c) of the other branches 1 and 2 are switched to the A side. From these branches 1 and 2, the known calibration signal x[n] is transmitted, and the feedback signal at this time is retained as $y_3$.

When the third process is completed ("Yes" at step S47), a calibration value is calculated (step S49). This calculation of the initial calibration value is described by taking the case in which the transmission signal is of a narrow band as an example. As described with reference to Fig. 16 mentioned above, the amplitude/phase deviation for each branch is represented by multiplication of a single complex number. Therefore, when it is assumed that amplitude/phase deviations for the branches 1, 2, and 3 are $\alpha_1$, $\alpha_2$, and $\alpha_3$, respectively, $y_1$, $y_2$, and $y_3$, which are stored values of the feedback signal, are represented by the following Eqs. (7).

$$y_1=-x[n]\alpha_1+x[n]\alpha_2+x[n]\alpha_3=x[n](-\alpha_1+\alpha_2+\alpha_3)$$

$$y_2=x[n]\alpha_1-x[n]\alpha_2+x[n]\alpha_3=x[n](\alpha_1-\alpha_2+\alpha_3)$$

$$y_3=x[n]\alpha_1+x[n]\alpha_2-x[n]\alpha_3=x[n](\alpha_1+\alpha_2-\alpha_3) \qquad (7)$$

Therefore, $\alpha_1$, $\alpha_2$, and $\alpha_3$ can be calculated by using the following Eqs. (8).

$$\alpha_1 = \frac{x^*[n](y_2 + y_3)}{2|x[n]|^2}$$

$$\alpha_2 = \frac{x^*[n](y_3 + y_1)}{2|x[n]|^2}$$

$$\alpha_3 = \frac{x^*[n](y_1 + y_2)}{2|x[n]|^2} \tag{8}$$

As described above, it is evident that the calibration value for each branch is given as a complex conjugate of thus calculated amplitude/phase deviation. The obtained calibration value cal for each branch is output to the corrector for calibration 7 provided to each of the antenna branches 3a to 3c for updating (step S50).

It is determined whether the calibration process has been completed for all branches (i≥L) (step S51). If calibration has not been completed for all branches ("No" at step S51), i is incremented by 1 (step S52), and then the process at step S43 and thereafter is performed. When calibration for all branches is completed ("Yes" at step S51), the first switches (31a) of all branches are changed to the A side (step S53). This halts the supply of the calibration signal from the known-calibration-signal generator 30 and allows an output of the baseband signal from the baseband signal generator 5, and then initial calibration is completed.

According to the fourth embodiment, by providing a calibration signal of a different phase rotation only to a certain antenna branch, calibration can be simultaneously performed for a plurality of branches.

(Fifth embodiment)

A fifth embodiment according to the present invention is described. Fig. 8 is a block diagram of an array-antenna-equipped communication apparatus according to the fifth embodiment. Figs. 9A to 9B are diagrams for explaining how the frequency of each signal is shifted according to the fifth embodiment. According to the fifth embodiment, components similar to those in the first embodiment are provided with the same references. According to the fifth embodiment, the structure is such that the transmission signal of each branch is shifted to each different frequency, thereby allowing the plurality of branches to be simultaneously calibrated.

Each of the antenna branches 3 (3a to 3d) is provided with a frequency shifter 40 that frequency-shifts the baseband signal output from the baseband signal generator 5 and a switch 41 that switches between a direct output of the baseband signal (A side) and a frequency shift by the frequency shifter 40 (B side). The calibration processor 4 is provided with a frequency shifter 42 (42a to 42d) that frequency-shifts the baseband signal frequency-shifted by the frequency shifter 40 so that the baseband signal has a baseband of a predetermined frequency (DC: 0 hertz) and a digital filter 43 (43a to 43d), such as a low-pass filter, for extracting a frequency component for each branch.

As shown in Fig. 9A, each of the antenna branches 3a to 3d transmits from the baseband signal generator 5 a baseband signal having the same frequency. As shown in Fig. 9B, the frequency shifters 40 provided to the antenna branches 3a to 3d perform different frequency shifts f1 to f4, respectively, for each branch (for convenience, only f1 is shown in Fig. 8). These signals transmitted from the respective branches have a center frequency so that the signals do not overlap with one another on a frequency axis. In a frequency domain for shifting the transmission signal, it is assumed that the frequency characteristic of an analog portion (particularly, the radio wave transmitter 9) is sufficiently flat. Therefore, in the frequency domain for shifting the transmission signal, if the analog portion of each branch has an frequency characteristic that is not negligible, adjustment is required by an equalizer or the like not shown so that the frequency characteristic is flat.

The signals transmitted from the respective branches are combined by the combiner 13 as feedback signals (fb), and the resultant signal is subjected to AD conversion by the ADC 15 to a digital signal (Fig. 9C). By providing frequency shifts -f1 to -f4 from the frequency shifters 42 (42a to 42d), the signals of the respective branches are frequency-shifted so as to be in a baseband centering on DC. The signal components of the respective branches at this time are shown in Fig. 9D. Thereafter, each signal is caused to pass the digital filter 43 (43a to 43d), thereby allowing a desired signal component for each branch to be extracted. The adaptive controller 16 then performs calibration for each branch by using the signal component for each branch and the transmission signal of each branch, which is the reference signal (ref). With the structure described above, initial calibration can be simultaneously performed for all plural branches.

(Sixth embodiment)

A sixth embodiment according to the present invention is described. Fig. 10 is a block diagram of an array-antenna-equipped communication apparatus according to the sixth embodiment. According to the fifth embodiment described above, the structure is such that initial calibration can be simultaneously performed for all branches. However, this increases the size of hardware. Particularly, in the structure of the fifth embodiment (depicted in Fig. 8), the calibration processor 4 is required to be provided with the frequency shifters 42 (42a to 42d) and the digital filters 43 (43a to 43d) as many as the number of branches. According to the sixth embodiment, the structure is such that the calibration processor 4 provided in a feedback loop performs time-division control over frequency shifts for extracting the signal components transmitted from the respective branches, and uses a variable frequency shifter 45. This achieves simplification of the structure by using one variable frequency shifter 45 and one digital filter 43.

Fig. 11 is a flowchart of a calibration process according to the sixth embodiment. The digital filter 43 provided to the calibration processor 4 is taken as a low-pass filter, and a passband centering on DC (0 hertz) is assumed. An array F (-f1 to -f4) in which the frequency shift amounts of the variable frequency shifters 45 correspond to the respective antenna branches 3 (3a to 3d) is set (step S61). For example, to perform initial calibration of the branch 1, the frequency of the variable frequency shifter 45 in the feedback system is set to f1.

The switches 41 of all branches are down to the port B side to enter a mode of initial calibration (step S62). Thereafter, the initial value 1 of the branch i to be calibrated is set (step S63). The frequency of the variable frequency shifter 45 is set to F[i] (step S64). The baseband signal of the branch i is substituted to the reference signal ref (r[n]=$x_i$[n]) (step S65). According to the above configuration, only the signal transmitted from the branch 1 is shifted into the passband of the digital filter 43. In an output of the digital filter 43, only the signal component from the branch 1 is extracted. From the reference signal ref (r[n]) and the feedback signal fb (y[n]), the adaptive controller 16 calculates a calibration value of the branch i (step S66), and the obtained calibration correction value cal of the branch i is output to the corrector for calibration 7 for updating (step S67).

It is determined whether the process described above has been performed for all branches (i≥N) (step S68). If calibration has not been completed for all branches ("No" at step S68), i is incremented by 1 (step S69). The procedure returns to step S64, from which a calibration process for the next branch is performed. When the calibration for all branches is completed ("Yes" at step S68), the switches 41 of all branches are down to the port A side (step S70), and the initial calibration process is completed.

With the process described above, initial calibration for the respective branches can be performed in a time-sequential manner. When a high-speed calibration process is required, a clock of an internal circuit forming the calibration processor 4 is operated at quadruple speed, thereby allowing the process to be performed for approximately the same processing time as that according to the fifth embodiment (in the case where the number of branches is four).

As described above, according to the sixth embodiment, with a small number of variable frequency shifters 45 and a small number of digital filters 43, calibration can be performed in a simplified structure with low power consumption.

(Seventh embodiment)

A seventh embodiment according to the present invention is described. Fig. 12 is a block diagram of an array-antenna-equipped communication apparatus according to the seventh embodiment. Figs. 13A to 13D are diagrams for explaining how the frequency of each signal is shifted according to the seventh embodiment. In the structure described in the sixth embodiment, the frequency shift amounts to be added to the baseband signals of the respective branches vary for each branch, but are not changed with time. On the other hand, in this seventh embodiment, by providing a function of changing with time the frequency shift amount of the forward system in each branch, calibration is performed for each branch in a time-division manner. To achieve this, the structure is such that a variable frequency shifter 47 that varies the center frequency of the baseband signal transmitted from the baseband signal generator 5 is provided and the switch 41 can freely change to an output of the variable frequency shifter 47. The frequency shift amount of the variable frequency shifter 47 is set by a frequency setting signal clt-f output from the adaptive controller 16.

As shown in Fig. 13A, each of the antenna branches 3a to 3d transmits from the baseband signal generator 5 a baseband signal having the same frequency. As shown in Fig. 13B, the variable frequency shifter 47 provided to each branch shifts the frequency of the forward system by a frequency shift amount (f1 to f4) different from each branch. According to the above configuration, as shown in Fig. 13C, of the output signals from the ADC 15 of the feedback system, only the signal component transmitted from a desired branch (in the example shown in the drawing, the branch 3) enters a passband of the digital filter 43, as shown in Fig. 13D. For the output signal of the digital filter 43, only the signal component transmitted from this desired branch is extracted. Based on the feedback signal fb and the reference signals ref, which are the transmission signals from the respective branches, initial calibration can be performed for this branch. Since the structure is such that no frequency shifter is used for the feedback system, the structure of the feedback system can be further simplified compared with the sixth embodiment.

Fig. 14 is a flowchart of a calibration process according to the seventh embodiment. Time control of the frequency shift amounts to the baseband signals of the respective branches is shown . An example of the process is shown in which the digital filter 43 of the feedback system is taken as a low-pass filter and a passband centering on DC (0 hertz) is set. An array G (0, g1 to g3) of the frequency shift amounts of the variable frequency shifters 47 of the respective antenna branches 3 (3a to 3d) corresponding to the branches performing initial calibration is set (step S81). According to the above configuration, the frequencies of the variable frequency shifters 47 in the forward system of the branches performing calibration are set to DC (0 hertz).

The switches 41 of all branches are down to the port B side to enter a mode of initial calibration (step S82). Thereafter, the initial value 1 of the branch i to be calibrated is set (step S83). Centering on the branch i to be calibrated, an initial value of k, which is a value for setting the frequency shift amounts of this branch i and other branches (the number of branches whose frequency shift amount has been set) and an initial value of m (frequency-shift-amount index) are set to 1 (step S84). It is determined whether the branch i to be calibrated=k (step S85). If they coincide with each other ("Yes" at step S85), the variable frequency shifter 47 in the forward system of the branch k is set to DC (0 hertz) (step S86). It is then determined whether the value of k coincides with the number of branches N (step S87). If the number of branches k in which frequency shift has been set is lower than the number of branches N ("No" at step S87), the value of k is incremented by 1 (step S88), and then the procedure returns to step S85. According to the above configuration, with the process at the time of k≠i ("No" at step S85), a frequency shift amount G[m] (hertz) of the variable frequency shifter 47 in the forward system of the branch k is set (step S89). The frequency-shift-amount index m for the other branches is incremented by 1 (step S90). According to the above configuration, at the time of calibration of the branch 1, for example, frequency shifts are set so that the branch 1 is at DC (0 hertz), the frequency shift amount of the branch 2 is g1, the frequency shift amount of the branch 3 is g2, and the frequency shift amount of the branch 4 is g3. When it is assumed that the frequency of the branch to be calibrated is taken as DC (0 hertz), the other frequency shift amounts g1, g2, and g3 can be arbitrarily set. Specifically, as shown in Fig. 13(b), at the time of calibration of the branch 3, the frequency shifts can be set so that this branch 3 is at DC (0 hertz), the frequency shift amount of the branch 1 is g1, the frequency shift amount of the branch 2 is g2, and the frequency shift amount of the branch 4 is g3.

When the value of k coincides with the number of branches N ("Yes" at step S87), for calibration of the branch i, the baseband signal of the branch i is substituted to the reference signal ref (r[n]=$x_i$[n]) (step S91). According to the above configuration, only the signal transmitted from the branch i to be calibrated passes through the digital filter 43, and only the signal component from the branch i is extracted. From the reference signal ref (r[n]) and the feedback signal fb (y[n]), the adaptive controller 16 calculates a calibration value of the branch i (step S92), and then outputs the obtained calibration correction value cal of the branch i to the corrector for calibration 7 for updating (step S93).

It is then determined whether the process described above has been performed for all branches (i≥N) (step S94). If calibration has not been completed for all branches ("No" at step S94), i is incremented by 1 (step S95), and then the procedure returns to step S84, from which a calibration process is performed for the next branch. When calibration for all branches is completed ("Yes" at step S94), the switches 41 of all branches are down to the port A side, and the initial calibration process is completed.

As described above, according to the seventh embodiment, by changing the frequency shift amount of the forward system in each branch with time, the frequency shift amounts to be added to the baseband signals of the respective branches are varied for each branch. Only the branch to be calibrated is caused to have a predetermined frequency and the other branches are caused to be shifted to have other frequencies, thereby allowing calibration for the respective branches to be performed in a time-division manner. According to the above configuration, according to the seventh embodiment, no frequency shifter is required to be provided at the calibration processor 4 side, thereby allowing a simpler structure compared with the sixth embodiment, and also achieving low power consumption.

The present invention is not restricted to the embodiments described above, and can be variously changed. For example, the number of antenna branches 3 can be variously selected depending on a desired directivity, etc. The structure is such that the calibration process is automatically performed at the time of starting the apparatus, but can be performed anytime as long as it is performed during a non-communication service period. For example, calibration may be performed during a time of maintenance check. Calibration of the antenna branches according to the present invention can be applied to various communication schemes, such as a time division duplex (TDD) scheme or a frequency division duplex (FDD) scheme.

As described above, according to the present invention, the phase and amplitude deviation of a plurality of antenna branches can be calibrated without interrupting a communication service by the array-antenna-equipped communication apparatus. The calibration process can be converged at high speed in a short time, thereby achieving an effect such that the array-antenna-equipped communication apparatus can be stably operated.

INDUSTRIAL APPLICABILITY

As has been described in the foregoing, the present invention is suitable for providing an array-antenna-equipped communication apparatus capable of achieving a stable calibration process while ensuring the convergence of an adaptive algorithm at the time of the calibration process, without interrupting a communication service. The present invention is suitable for providing a calibration method for an array-antenna-equipped communication apparatus capable of achieving a stable calibration process while ensuring the convergence of an adaptive algorithm at the time of the calibration process, without interrupting a communication service.

**Claims**

1. An array-antenna-equipped communication apparatus including an array of antennas and a plurality of antenna branches, the apparatus comprising
   a calibration processing unit that calculates, at the time of non-communication, an initial value for an adaptive control calibration process for canceling an amplitude or phase deviation due to a radio wave transmitting unit provided to each of the antenna branches.

2. An array-antenna-equipped communication apparatus including an array of antennas and a plurality of antenna branches, the apparatus comprising
   a calibration processing unit that calculates, at the time of non-communication, the initial values of plural antenna branches of the antenna branches each caused to transmit a baseband signal, the calculation being performed by taking the baseband signal as a reference signal and a signal obtained through up-conversion via the radio wave transmitting unit as a feedback signal and by being based on the reference signal and the feedback signal.

3. The array-antenna-equipped communication apparatus according to claim 1 or 2, wherein
   each of the antenna branches includes a switching unit that switches between transmission and non-transmission of a signal from the antenna branch, and
   the calibration processing unit
   controls the switching unit to sequentially cause the antenna branches, one by one, to transmit the baseband signal, and calculates the initial values of plural antenna branches of the antenna branches each caused to transmit the baseband signal, the calculation being performed by taking the baseband signal as the reference signal and the signal obtained through up-conversion via the radio wave transmitting unit as the feedback signal and by being based on the reference signal and the feedback signal.

4. The array-antenna-equipped communication apparatus according to claim 1 or 2, wherein
   each of the antenna branches includes a switching unit that switches between transmission and non-transmission of a baseband signal from the antenna branch, and
   the calibration processing unit
   controls the switching unit to increment, one by one, antenna branches to be caused to transmit the baseband signal, and calculates the initial value of one of the incremented antenna branches each caused to transmit the baseband signal, the calculation being performed by taking the baseband signal transmitted from the one of the incremented antenna branches as the reference signal, taking, from out of plural antenna branches' signals obtained through up-conversion via the radio wave transmitting unit, a signal transmitted from the one of the incremented antenna branches as the feedback signal and by being based on the reference signal and the feedback signal.

5. The array-antenna-equipped communication apparatus according to claim 1 or 2, wherein
   each of the antenna branches includes a phase shifting unit that shifts a phase of the baseband signal to be transmitted from each of the antenna branches, and
   the calibration processing unit
   controls the phase shifting unit to shift the phase of the baseband signal of one of the antenna branches and, by taking the baseband signal as the reference signal and the signal obtained through up-conversion via the radio wave transmitting unit as the feedback signal, takes a phase that minimizes an error between the reference signal and the feedback signal as the initial value of the phase-shifted antenna branch.

6. The array-antenna-equipped communication apparatus according to claim 5, wherein
   the phase shifting unit
   shifts, by a predetermined fixed amount, the phase of the baseband signal to be transmitted.

**7.** The array-antenna-equipped communication apparatus according to claim 5, wherein
the calibration processing unit
controls the phase shifting unit and, after calculating the initial value by shifting, by the predetermined fixed amount, the phase of the baseband signal to be transmitted, re-calculates the initial value based on a phase that minimizes the error and is obtained by successively shifting a phase at a predetermined angle in a range with reference to a phase shifting angle at the time of calculation of the initial value.

**8.** The array-antenna-equipped communication apparatus according to claim 1, further comprising:

a known-calibration-signal generating unit that supplies a known baseband signal as a signal for calibration to each of the antenna branches; and
a phase reversing unit that is provided to each of the antenna branches and reverses a phase of the baseband signal supplied by the known-calibration-signal generating unit, wherein
the calibration processing unit
supplies the known baseband signal from the known-calibration-signal generating unit to all of the antenna branches, wherein the known baseband signal supplied to one of the antenna branches has phase-reversed, and simultaneously calculates the initial values at all of the antenna branches by taking the known baseband signal as the reference signal and a plurality of signals obtained through up-conversion via the radio wave transmitting unit of the antenna branches as feedback signals.

**9.** The array-antenna-equipped communication apparatus according to claim 1 or 2, wherein
each of the antenna branches includes a first frequency shifting unit that frequency-shifts, by a predetermined amount, a frequency of the baseband signal to be transmitted from the antenna branch so that frequencies of the baseband signals of the antenna branches are different from each other,
the calibration processing unit includes a plurality of second frequency shifting units that are provided correspondingly to the number of antenna branches and return the baseband signal frequency-shifted by the first frequency shifting unit to an original frequency, and
the calibration processing unit simultaneously calculates the initial values at all of the antenna branches by taking the baseband signal transmitted from each of the antenna branches at a stage before being frequency-shifted by the first frequency shifting unit as the reference signal and the baseband signal obtained through up-conversion via the radio wave transmitting unit and frequency-shift-returned by the second frequency shifting units as the feedback signal.

**10.** The array-antenna-equipped communication apparatus according to claim 9, wherein
the second frequency shifting units freely and successively varies a frequency shift amount of the feedback signal, and
the calibration processing unit sequentially calculates the initial values at the antenna branches by varying, by the second frequency shifting units, the feedback signal output from each of the antenna branches by the frequency shift amount corresponding to each of the antenna branches.

**11.** The array-antenna-equipped communication apparatus according to claim 1 or 2, wherein
each of the plurality of antenna branches includes a frequency shifting unit that can freely and successively shift a frequency so that frequencies of the baseband signals to be transmitted from the antenna branches are different from each other,
the calibration processing unit controls the frequency shifting unit so that different frequency shifts are applied to the baseband signals to be transmitted from antenna branches other than an antenna branch to be calibrated, and
the calibration processing unit
sequentially calculates the initial values at the antenna branches by taking the baseband signal at a stage before being frequency-shifted by the frequency shifting unit as the reference signal and the signal obtained through up-conversion via the radio wave transmitting unit as the feedback signal.

**12.** The array-antenna-equipped communication apparatus according to claim 1 or 2, wherein
the calibration processing unit calculates the initial value at the time of starting the apparatus.

**13.** The array-antenna-equipped communication apparatus according to claim 1 or 2, wherein
the antenna branch includes:

a baseband-signal generating unit that generates the baseband signal for each of the antenna branches;
a correcting unit for calibration that updatably stores the initial value and performs calibration correction on the baseband signal generated by the baseband-signal generating unit by using the stored initial value;
a DA converting unit that performs D/A conversion on the baseband signal after calibration correction by the correcting unit for calibration; and
a radio wave transmitting unit that up-converts and wirelessly transmits the baseband signal converted by DA converting unit.

14. The array-antenna-equipped communication apparatus according to claim 13, wherein
the calibration processing unit includes:

a combining unit that combines signals transmitted from the antenna branches;
a receiving unit for calibration that converts the signals combined by the combining unit to a baseband signal;
an AD converting unit that performs A/D conversion on an output of the receiving unit for calibration; and
an adaptive control unit that performs a process of calculating the initial value by taking an output of the AD converting unit as the feedback signal and taking in the feedback signal together with the reference signal and causes the calculated initial value to be updated and stored in the correcting unit for calibration.

15. A calibration method of an array-antenna-equipped communication apparatus including an array of array antennas and a plurality of antenna branches, the method comprising:

a calibration processing step of calculating, at the time of non-communication, an initial value required for an adaptive control calibration process for canceling an amplitude or phase deviation due to a radio wave transmitting unit provided to each of the antenna branches.

16. A calibration method of an array-antenna-equipped communication apparatus including a plurality of antenna branches and array antennas, the method comprising:

a baseband transmitting step of causing baseband signals to be transmitted from plural antenna branches of the antenna branches; and
a calibration processing step of calculating, at the time of non-communication, the initial values of the antenna branches transmitting the baseband signals by taking the baseband signals as reference signals and a signal obtained through up-conversion via the radio wave transmitting unit as a feedback signal and by being based on the reference signals and the feedback signal.

17. The calibration method of the array-antenna-equipped communication apparatus according to claim 15 or 16, wherein
at the calibration processing step,
the antenna branches are sequentially caused, one by one, to transmit the baseband signal and the initial values of the antenna branches transmitting the baseband signals are calculated by taking the baseband signal as the reference signal and the signal obtained through up-conversion via the radio wave transmitting unit as the feedback signal and by being based on the reference signal and the feedback signal.

18. The calibration method of the array-antenna-equipped communication apparatus according to claim 15 or 16, wherein
at the calibration processing step,
the antenna branches are incremented, one by one, to be caused to transmit the baseband signal, and the initial value of one of the incremented antenna branches is calculated by taking the baseband signal transmitted from the one of the incremented antenna branches as the reference signal, taking, from out of plural antenna branches' signals obtained through up-conversion via the radio wave transmitting unit, a signal transmitted from the one of the incremented antenna branches as the feedback signal and by being based on the reference signal and the feedback signal.

19. The calibration method of the array-antenna-equipped communication apparatus according to claim 15 or 16, wherein
the calibration processing step includes
a phase shifting step of shifting a phase of the baseband signal to be transmitted from one of the antenna branches, and
by taking the baseband signal as the reference signal and the signal obtained through up-conversion via the radio wave transmitting unit as the feedback signal, a phase that minimizes an error between the reference signal and the feedback signal is taken as the initial value of the phase-shifted antenna branch.

20. The calibration method of the array-antenna-equipped communication apparatus according to claim 19, wherein

at the phase shifting step, the phase of the baseband signal to be transmitted is shifted by a predetermined fixed amount.

21. The calibration method of the array-antenna-equipped communication apparatus according to claim 19, wherein at the calibration processing step,
after the initial value is calculated by shifting, by the predetermined fixed amount, the phase of the baseband signal to be transmitted, the initial value is re-calculated from a phase that minimizes the error and is obtained by successively shifting a phase at a predetermined angle in a range with reference to a phase shifting angle at the time of calculation of the initial value.

22. The calibration method of the array-antenna-equipped communication apparatus according to claim 15, wherein the calibration processing step includes
a known-calibration-signal supplying step of supplying a known baseband signal as a signal for calibration to each of the antenna branches,
the known baseband signal is supplied to all of the antenna branches, wherein the known baseband signal supplied to one of the antenna branches has phase-reversed, and
the initial values at all of the antenna branches are simultaneously calculated by taking the known baseband signal as the reference signal and a plurality of signals obtained through up-conversion via the radio wave transmitting unit of the antenna branches as the feedback signals.

23. The calibration method of the array-antenna-equipped communication apparatus according to claim 15 or 16, wherein the calibration processing step includes:

a first frequency shifting step of frequency-shifting, by a predetermined amount, frequencies of the baseband signals transmitted from the antenna branches so that the frequencies are different from each other; and
a second frequency shifting step of units of returning, correspondingly to the number of antenna branches, the frequency-shifted baseband signal to an original frequency, and
the initial values at all of the antenna branches are simultaneously calculated by taking the baseband signal transmitted from each of the antenna branches at a stage before being frequency-shifted at the first frequency shifting step as the reference signal and the baseband signal obtained through up-conversion via the radio wave transmitting unit and frequency-shift-returned at the second frequency shifting step as the feedback signal.

24. The calibration method of the array-antenna-equipped communication apparatus according to claim 23, wherein at the calibration processing step,
the initial values at the antenna branches are sequentially calculated by varying, at the second frequency shifting step, the feedback signal output from each of the antenna branches by a frequency shift amount corresponding to each of the antenna branches.

25. The calibration method of the array-antenna-equipped communication apparatus according to claim 15 or 16, wherein the calibration processing step includes
a frequency shifting step of frequency-shifting the baseband signals to be transmitted from antenna branches other than an antenna branch to be calibrated so that different frequency shifts are applied to the baseband signals, and
the initial values at the antenna branches are sequentially calculated by taking the baseband signal at a stage before being transmitted by each of the antenna branches and frequency-shifted at the frequency shifting step as the reference signal and the signal obtained through up-conversion via the radio wave transmitting unit as the feedback signal.

26. The calibration method of the array-antenna-equipped communication apparatus according to claim 15 or 16, wherein at the calibration processing step, the initial value is calculated at the time of starting the apparatus.

# FIG.1

EP 1 630 976 A1

# FIG.2

```
                        ┌─────────────┐
                        │    START    │
                        └─────────────┘
                               │
                               ▼
        ┌──────────────────────────────────────────┐
        │                  i=1                      │──S1
        └──────────────────────────────────────────┘
                               │
                               ▼
        ┌──────────────────────────────────────────┐
        │ • TURN ON SWITCH OF BRANCH i              │
        │ • TURN OFF SWITCHES OF BRANCHES           │──S2
        │   OTHER THAN BRANCH i                     │
        └──────────────────────────────────────────┘
                               │
                               ▼
        ┌──────────────────────────────────────────┐
        │ SUBSTITUTE BASEBAND SIGNAL OF BRANCH i    │
        │   TO REFERENCE SIGNAL⇒r[n]=x_i[n]         │──S3
        └──────────────────────────────────────────┘
                               │
                               ▼
        ┌──────────────────────────────────────────┐
        │ CALCULATE CALIBRATION VALUE OF BRANCH i   │
        │ BASED ON REFERENCE SIGNAL r[n] AND        │──S4
        │ FEEDBACK SIGNAL y[n]                      │
        └──────────────────────────────────────────┘
                               │
                               ▼
        ┌──────────────────────────────────────────┐
        │ UPDATE CORRECTOR FOR CALIBRATION          │──S5
        │          OF BRANCH i                      │
        └──────────────────────────────────────────┘
                               │
                               ▼
                          ╱─────────╲  S6
                        ╱             ╲        No
                       ⟨     i≧N?      ⟩─────────────┐
                        ╲             ╱              │
                          ╲─────────╱                │
                               │ Yes                 ▼
        ┌──────────────────────────────┐   ┌──────────────┐
        │ TURN ON SWITCHES OF ALL      │──S8│    i=i+1     │──S7
        │         BRANCHES             │   └──────────────┘
        └──────────────────────────────┘
                               │
                               ▼
                        ┌─────────────┐
                        │     END     │
                        └─────────────┘
```

$$N: \text{NUMBER OF BRANCHES}$$

# FIG.3

```
                    ┌──────────────┐
                    │    START     │
                    └──────────────┘
                           │
    ┌──────────────────────────────────────────────┐
    │                   i=1                          │ S11
    └──────────────────────────────────────────────┘
                           │
    ┌──────────────────────────────────────────────┐
    │ · TURN ON SWITCHES OF BRANCHES 1 TO i          │
    │ · TURN OFF SWITCHES OF BRANCHES i+1 TO N       │ S12
    └──────────────────────────────────────────────┘
                           │
    ┌──────────────────────────────────────────────┐
    │     SUBSTITUTE BASEBAND SIGNAL OF              │
    │ BRANCH i TO REFERENCE SIGNAL⇒r[n]=xᵢ[n]        │ S13
    └──────────────────────────────────────────────┘
                           │
    ┌──────────────────────────────────────────────┐
    │ SUBSTITUTE CORRECTED FEEDBACK SIGNAL TO        │
    │ FEEDBACK SIGNAL⇒ y[n]=y[n]-(x₁[n]w₁*[n]+...+xᵢ-₁[n]wᵢ-│ S14
    │                   ₁*[n])                        │
    └──────────────────────────────────────────────┘
                           │
    ┌──────────────────────────────────────────────┐
    │ CALCULATE CALIBRATION VALUE OF BRANCH i        │
    │ BASED ON REFERENCE SIGNAL r[n] AND             │ S15
    │ FEEDBACK SIGNAL y[n]                           │
    └──────────────────────────────────────────────┘
                           │
    ┌──────────────────────────────────────────────┐
    │ UPDATE CORRECTOR FOR                           │
    │ CALIBRATION OF BRANCH i                        │ S16
    └──────────────────────────────────────────────┘
```

$$\text{SUBSTITUTE BASEBAND SIGNAL OF BRANCH } i \text{ TO REFERENCE SIGNAL} \Rightarrow r[n]=x_i[n]$$

$$y[n]=y[n]-(x_1[n]w_1^*[n]+...+x_{i-1}[n]w_{i-1}^*[n])$$

**S17** $i \geqq N$? — No → **S18** $i=i+1$

Yes ↓

**S19** TURN ON SWITCHES OF ALL BRANCHES

```
                    ┌──────────────┐
                    │     END      │
                    └──────────────┘
```

┌─────────────────────────────────┐
┊ N: NUMBER OF BRANCHES            ┊
└─────────────────────────────────┘

17

# FIG.4

ANTENNA 2

ANTENNA BRANCH 4
ANTENNA BRANCH 3
ANTENNA BRANCH 2
ANTENNA BRANCH 1

BASEBAND SIGNAL GENERATOR

CORRECTOR FOR CALIBRATION

DAC

UP-CONVERTER

LOCAL OSCILLATOR

RADIO WAVE TRANSMITTER

DIRECTIONAL COUPLER 12

COMBINER

ADAPTIVE CONTROLLER

ADC

RECEIVER FOR CALIBRATION

REFERENCE SIGNAL(ref)

FEEDBACK SIGNAL (fb)

ctl-SW

ctl-φ

cal

EP 1 630 976 A1

# FIG.5

START

i=1 — S21

- BRANCH i⇒CHANGE SWITCH TO PORT A
- BRANCHES OTHER THAN BRANCH i⇒ CHANGE SWITCH TO PORT B — S22

k=1 — S23

SET $\phi$ =(K-1) · $\Delta \phi$ IN PHASE SHIFTER OF BRANCH i — S24

SUBSTITUTE BASEBAND SIGNAL OF BRANCH i IN REFERENCE SIGNAL⇒ r[n]=$x_i$[n] — S25

CALCULATE CALIBRATION VALUE OF BRANCH i BASED ON FEEDBACK SIGNAL y[n] AND REFERENCE SIGNAL r[n] — S26

CALCULATE ELECTRIC POWER OF ERROR SIGNAL Pe(i,k)=|e[n]|$^2$=|r[n]-y[n]|$^2$ — S27

S28 k≧M? — No

Yes

FOR BRANCH i, DETERMINE PHASE ROTATION AMOUNT $\phi$ BASED ON k MINIMIZING Pe(i,k) — S30

k=k+1 — S29

STORE PHASE SHIFT AMOUNT $\phi$ IN CORRECTOR FOR CALIBRATION OF BRANCH i — S31

S32 i≧N ? — No

Yes

CHANGE SWITCHES OF ALL BRANCHES TO PORT B — S34

i=i+1 — S33

END

$\Delta \phi$: FIXED PHASE SHIFT AMOUNT
M :($\Delta \phi$)/(2$\pi$)
N: NUMBER OF BRANCHES

# FIG.6

EP 1 630 976 A1

# FIG.7

START

CHANGE SWITCH SW1 TO PORT B ~S41

i=1 ~S42

- BRANCHES 3×i-2, 3×i-1, 3×i
  ⇒TURN ON SWITCH SW2
- OTHER BRANCHES
  ⇒TURN OFF SWITCH SW2  ~S43

k=1 ~S44

| | BRANCH | | |
|---|---|---|---|
| | 3×i-2 | 3×i-1 | 3×i |
| k=1 | -x[n] | x[n] | x[n] |
| k=2 | x[n] | -x[n] | x[n] |
| k=3 | x[n] | x[n] | -x[n] |

CONTROL SWITCH SW3 TO TRANSMIT KNOWN SIGNAL FROM BRANCHES 3×i-2, 3×i-1, 3×i ~S45

STORE FEEDBACK SIGNAL
$y[n] \Rightarrow y_k = y[n]$ ~S46

S47
$k \geqq 3$?  No

Yes

k=k+1 ~S48

CALCULATE CALIBRATION VALUES OF BRANCHES 3×i-2, 3×i-1, 3×i BASED ON $x[n], y_1, y_2, y_3$ ~S49

x[n]: KNOWN CALIBRATION SIGNAL
L: POSITIVE INTEGER (L=N/3)
N: NUMBER OF BRANCHES

UPDATE CORRECTOR FOR CALIBRATION OF BRANCHES 3×i-2, 3×i-1, 3×i ~S50

S51
$i \geqq L$ ?  No

Yes  S53

i=i+1 ~S52

CHANGE SWITCHES SW1 OF ALL BRANCHES TO PORT A

END

**FIG.8**

RADIO WAVE TRANSMITTER

ANTENNA BRANCH 4
ANTENNA BRANCH 3
ANTENNA BRANCH 2
ANTENNA BRANCH 1

BASEBAND SIGNAL GENERATOR

CORRECTOR FOR CALIBRATION

DAC

UP-CONVERTER

LOCAL OSCILLATOR

ctl-SW

cal

DIRECTIONAL COUPLER

ANTENNA

COMBINER

RECEIVER FOR CALIBRATION

ADC

DIGITAL FILTER

ADAPTIVE CON-TROLLER

REFERENCE SIGNALS(ref)

FEEDBACK SIGNAL (fb)

EP 1 630 976 A1

FIG.9A     FIG.9B     FIG.9C     FIG.9D

BASEBAND SIGNAL

BRANCH1   f1 f2 f3 f4

BRANCH2   f1 f2 f3 f4

BRANCH3   f1 f2 f3 f4

BRANCH4   f1 f2 f3 f4

DAC INPUT SIGNAL

BRANCH1   f1 f2 f3 f4

BRANCH2   f1 f2 f3 f4

BRANCH3   f1 f2 f3 f4

BRANCH4   f1 f2 f3 f4

ADC OUTPUT SIGNAL

f1 f2 f3 f4

DIGITAL FILTER OUTPUT SIGNAL

SIGNAL COMPONENT OF BRANCH 1   f1 f2 f3 f4

SIGNAL COMPONENT OF BRANCH 2   f1 f2 f3 f4

SIGNAL COMPONENT OF BRANCH 3   f1 f2 f3 f4

SIGNAL COMPONENT OF BRANCH 4   f1 f2 f3 f4

EP 1 630 976 A1

# FIG.10

EP 1 630 976 A1

# FIG.11

START

SET ARRAY F={-f1, -f2, -f3, -f4} ⟶ S61

CHANGE SWITCHES OF ALL BRANCHES TO PORT B ⟶ S62

$i=1$ ⟶ S63

SET FREQUENCY OF VARIABLE FREQUENCY SHIFTER IN FEEDBACK SYSTEM WITH F[i] ⟶ S64

SUBSTITUTE BASEBAND SIGNAL OF BRANCH i TO REFERENCE SIGNAL ⟹ $r[n]=x_i[n]$ ⟶ S65

CALCULATE CALIBRATION VALUE OF BRANCH i BASED ON REFERENCE SIGNAL $r[n]$ AND FEEDBACK SIGNAL $y[n]$ ⟶ S66

UPDATE CORRECTION FOR CALIBRATION OF BRANCH i ⟶ S67

S68 — $i \geqq N$ ? — No ⟶ $i=i+1$ ⟶ S69

Yes

CHANGE SWITCHES OF ALL BRANCHES TO PORT A ⟶ S70

END

N:NUMBER OF BRANCHES

# FIG.12

ANTENNA 2

2d
2c
2b
2a

DIRECTIONAL COUPLER
12

1

3
3a 3b 3c 3d

ANTENNA BRANCH 4
ANTENNA BRANCH 3
ANTENNA BRANCH 2
ANTENNA BRANCH 1

41

BASEBAND SIGNAL GENERATOR

5

A
B

f1 ⊗ 47

ctl-f

ctl-SW

CORRECTOR FOR CALIBRATION
7

cal

DAC
8

UP-CONVERTER
10

LOCAL OSCILLATOR

9
RADIO WAVE TRANSMITTER

11

COMBINER
13

ADAPTIVE CONTROLLER
16

REFERENCE SIGNAL(ref)

DIGITAL FILTER
43

ADC
15

RECEIVER FOR CALIBRATION
14

FEEDBACK SIGNAL (fb)

4

EP 1 630 976 A1

# FIG.13A          FIG.13B          FIG.13C          FIG.13D

| BASEBAND SIGNAL |
|:---:|

BRANCH1

BRANCH2

BRANCH3

BRANCH4

| DAC INPUT SIGNAL |
|:---:|

BRANCH1 — g1 g2 0 g3

BRANCH2 — g1 g2 0 g3

BRANCH3 — g1 g2 0 g3

BRANCH4 — g1 g2 0 g3

| ADC OUTPUT SIGNAL |
|:---:|

g1 g2 0 g3

| DIGITAL FILTER OUTPUT SIGNAL |
|:---:|

SIGNAL COMPONENT OF BRANCH 3 — 0

EP 1 630 976 A1

# FIG.14

START

SET ARRAY G={g1, g2, g3} — S81

CHANGE SWITCHES OF ALL BRANCHES TO PORT B — S82

$i=1$ — S83

$k=1, m=1$ — S84

$k=i$ ? — S85

**No** →

SET FREQUENCY OF FREQUENCY SHIFTER IN FORWARD SYSTEM OF BRANCH k WITH G[m] (Hz) — S89

$m=m+1$ — S90

**Yes** — S86

SET FREQUENCY OF FREQUENCY SHIFTER IN FORWARD SYSTEM OF BRANCH k WITH 0 (Hz) — S86

$k \geqq N$? — S87

**No** →

$k=k+1$ — S88

**Yes**

SUBSTITUTE BASEBAND SIGNAL OF BRANCH i TO REFERENCE SIGNAL $\Rightarrow$ $r[n]=x_i[n]$ — S91

CALCULATE CALIBRATION VALUE OF BRANCH i BASED ON REFERENCE SIGNAL $r[n]$ AND FEEDBACK SIGNAL $y[n]$ — S92

UPDATE CORRECTOR FOR CALIBRATION OF BRANCH i — S93

$i \geqq N$? — S94

**No** →

$i=i+1$ — S95

**Yes**

CHANGE SWITCHES OF ALL BRANCHES TO PORT A — S96

END

N:NUMBER OF BRANCHES

# FIG.15

EP 1 630 976 A1

# FIG.16

EP 1 630 976 A1

ANTENNA
100

101

101a

ANTENNA BRANCH 4

ANTENNA BRANCH 3

ANTENNA BRANCH 2

ANTENNA BRANCH 1

DIRECTIONAL
COUPLER

BASEBAND
SIGNAL
GENERATOR

$x_1[n]$  $\otimes$  $u_1[n]$  $\otimes$  $y_1[n]$

$w_1[n]*$

$\alpha_1$

103

$y_1[n]$  $y_4[n]$

$x_1[n]$  $x_4[n]$

COMBINER  111

+

$r[n]$  ADAPTIVE
CONTROLLER  114  $y[n]$

102

## INTERNATIONAL SEARCH REPORT

| International application No. |
|---|
| PCT/JP03/06947 |

| A. CLASSIFICATION OF SUBJECT MATTER |
|---|
| Int.Cl⁷ H04B7/10 |

According to International Patent Classification (IPC) or to both national classification and IPC

| B. FIELDS SEARCHED |
|---|
| Minimum documentation searched (classification system followed by classification symbols)<br>    Int.Cl⁷ H04B7/00, H04B7/02-7/12, H04L1/02-1/04 |

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br>A | JP 10-336149 A (Matsushita Electric Industrial<br>Co., Ltd.),<br>18 December, 1998 (18.12.98),<br>& EP 0881704 A2        & CN 1200605 A<br>& KR 98087443 A | 1-3,12-17,26<br>4-11,18-24 |
| A | WO 00/08777 A1 (Sanyo Electric Co., Ltd.),<br>17 February, 2000 (17.02.00),<br>& AU 9949335 A        & EP 1104122 A1<br>& JP 2000-564314 A        & CN 1322414 A<br>& KR 2001085330 A | 1-26 |
| A | JP 3-165103 A (NEC Corp.),<br>17 July, 1991 (17.07.91),<br>(Family: none) | 5-7,19-21 |

| ☐ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    05 September, 2003 (05.09.03) | Date of mailing of the international search report<br>    24 September, 2003 (24.09.03) |
|---|---|
| Name and mailing address of the ISA/<br>    Japanese Patent Office | Authorized officer |
| Facsimile No. | Telephone No. |

Form PCT/ISA/210 (second sheet) (July 1998)